# EUROPEAN PATENT APPLICATION

(11) **EP 4 607 301 A1**
(43) Date of publication of application: **27.08.2025**
(21) Application number: 25159222.6
(22) Date of filing: 20.02.2025
(51) Int. Cl.: G05B 19/406, G05B 19/418, B25J 9/16, G05D 1/617

(54) **IMPROVED SORTING SYSTEM**

(30) Priority: 21.02.2024 IT 202400003673
(71) Applicant: Fives Intralogistics S.p.A., 21015 Lonate Pozzolo (VA) (IT)
(72) Inventor: CHIEREGO, Lorenzo, 2015 Lonate Pozzolo (Varese) (IT)
(74) Representative: Gagliardelli, Fabrizio

(57) **Abstract**

A method is described for managing one or more robots (2), comprising following steps: providing a zone subject to restrictions (3) in a structure; providing one or more robots (2) in the zone subject to restrictions (3); applying a limit to or inhibiting one or more operating functions of the robots (2); for each of the robots (2), detecting the presence of a predetermined number of first identification elements (11) in the zone subject to restrictions (3); for each of the robots (2), detecting the presence of a predetermined number of second identification elements (13) of the zone subject to restrictions (3), which are of a different type from that of the first identification elements (11); for each of the robots (2) for which the presence of the predetermined number of first identification elements (11) has been detected and for which the presence of the predetermined number of second identification elements (13) is detected, disapplying the limit or allowing one or more functions; when, for a predetermined number of robots (2) the limit has been disapplied or one or more functions has been allowed, actuating the robots (2) in such a way that they perform operating tasks in the zone subject to restrictions (3).

## Description

This invention relates to an improved automated mobile robot (AMR) sorting system.

It is known that various operators in the field of electronic commerce, shipments or third-party logistics have automated the sorting of products in their warehouses.

Some prior art sorting systems use mobile autonomous sorting robots. Of these, a known system uses two types of robots: one so-called "collaborative" and one so-called "non-collaborative".

The collaborative robot is set up to move to zones of the warehouse where persons also work, while the non-collaborative robot is destined to confined zones where there are no human workers.

Collaborative robots are equipped with special safety devices which allow them to recognise the presence of persons in the immediate vicinity along their path and they are also constrained to travel below a maximum speed threshold which allows them to stop safely at any time.

Non-collaborative robots, on the other hand, are designed to maximise performance and are therefore not subject to the constraints imposed on collaborative robots.

This type of system is inherently safe but has the disadvantage of being inflexible.

The technical purpose which forms the basis of the present invention is to propose a method, a system and a program able to overcome the above-mentioned drawbacks of the prior art.

The technical purpose is attained by the method, the system and the program realised according to the accompanying claims.

Further features and advantages of this invention will become more apparent in the non-limiting description of a preferred but non-limiting embodiment of a sorting system, as illustrated in the accompanying drawings, in which:
- figure 1 is a schematic view of a plant in which the system according to the invention can be installed;
- figures 2 and 3 are illustrations of identification codes of a collaborative zone and a zone subject to restrictions of the plant; and
- figure 4 is a diagram of the processing means of the system according to the invention.

With reference to the above-mentioned figures of the drawings, reference numeral 1 denotes a sorting system in which a system for controlling robots 2 according to the invention can operate.

More in detail, the plant 1 is located in a structure, which, for example, may consist of or include a storage system or may be another type of room or building, etc.

The plant 1 comprises at least one zone subject to restrictions 3, which is preferably a zone of the "non-collaborative" type, in the above-mentioned sense; the plant 1 also preferably comprises at least one zone of the "collaborative" type 4. The two zones 3, 4 mentioned above are connected or connectable by accesses and outlets, if necessary with the interposition of other zones.

The restricted zone 3 is preferably of the type where access to human personnel 40 is not allowed during normal working activities and is destined to a high productivity operating regime.

More in detail, the restricted zone 3 may be physically confined, that is to say, surrounded by a fence or other barrier or it may be defined by virtual or conventional confinement, for example by geo-fences or other means.

Preferably, in the zone subject to restrictions 3, there are points for loading and unloading articles which must be sorted; these loading points may be of the "active" type and therefore comprise the use of motor-driven conveyors or be of the "passive" type, that is to say, comprise the use of chutes, passive roller conveyors, supporting shelves, etc.

The robots 2 of the proposed system, which are preferably mobile autonomous sorting robots 2, operate between the loading points and the unloading points.

Advantageously, the robots 2 according to the invention are designed to operate both in "collaborative" mode and in "non-collaborative" mode.

In practice, the robots 2 according to the invention are provided with safety systems with which the prior art collaborative robots 2 are equipped but are designed to keep these systems active when they are in the collaborative zone 4 and to deactivate (entirely or partly) these systems when they are in the non-collaborative zone 3.

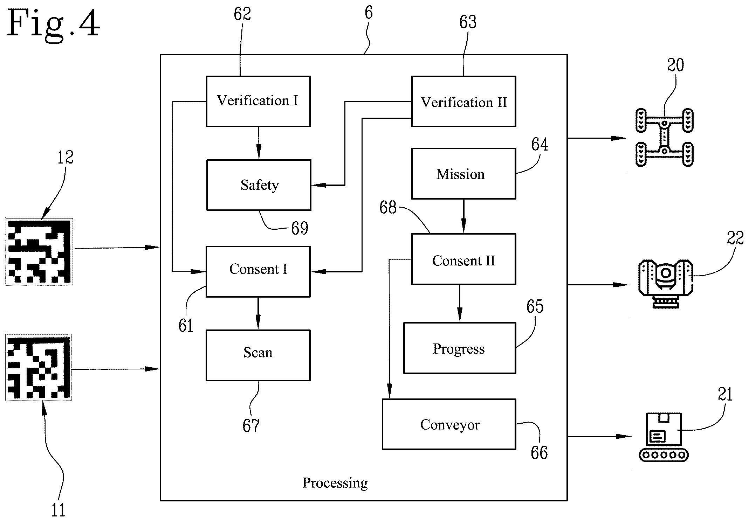

More in detail, the robots 2 are provided with at least one device 22 for detecting the presence of an obstacle or a person on their path 10 which remains active when the robot 2 is in the collaborative zone 4. This device may comprise a laser scanner 22 (shown schematically in figure 4). In that zone, the robot 2 is designed to move at a speed lower than or equal to a first safety threshold, which allows the robot 2 to be able to immediately stop on site, if it detects the presence of an obstacle or a person. For example, the first safety threshold may be equal to 1.2 m/s or be a similar value. The traction apparatus 20 is shown schematically in figure 4. In particular, the robot 2 may include at least one safety encoder for an effective control of the speed of translation.

Moreover, the robot 2 is equipped with at least one conveyor 21 (shown schematically in figure 4), which may be, for example, a motor-driven conveyor belt 21, designed to support and load/unload an article. The robot 2 is designed to deactivate its conveyor 21 when it is in the collaborative zone 4, especially to prevent the accidental release of a heavy article from injuring a person who works in the collaborative zone 4. Advantageously, in methods described in detail below, when the robots 2 according to the invention are in the zone subject to restrictions 3, they can disapply the above-mentioned speed limit and therefore move in that zone with a speed greater than the first safety threshold and they can also activate the conveyor 21, preparing to perform a high performance sorting. Before describing in detail the operation and features of the invention, it will be understood that owing to the fact that the robots 2 of the proposed system can switch from a collaborative mode, with which they can work in the same area of the plant 1 where there are persons 40 and movable elements which can constitute obstacles, to a non-collaborative mode, with which they can work with high productivity in a zone prohibited to personnel, the system exceeds the limits of cost and flexibility of the prior art.

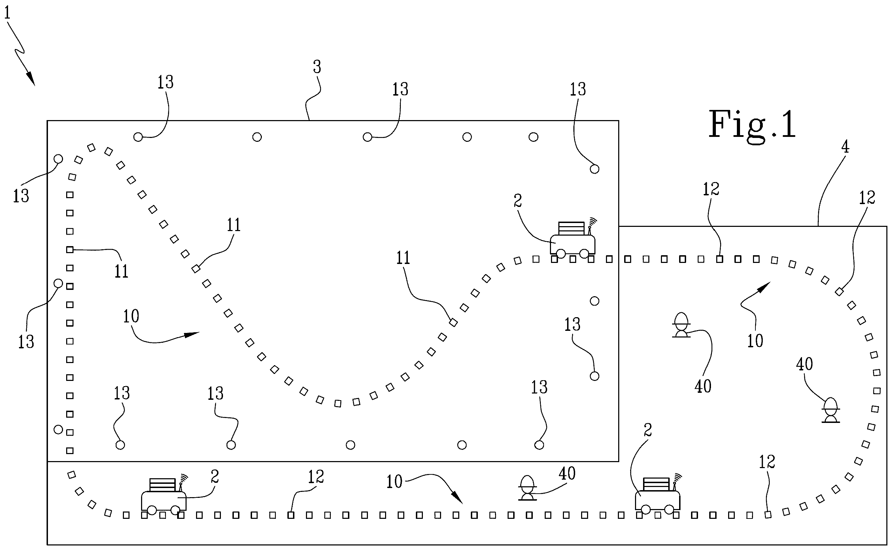

In effect, instead of providing two types of robots for the two types of area, the invention uses the same robot 2 in both areas. For this reason, the same robot 2 can travel in the collaborative zone 4, where it can optionally passively receive articles from the human personnel 40 and in any case can work with it in complete safety and then enter and leave the zone subject to restrictions 3, where the security safeguards are not necessary and the sorting activity can be actuated with the maximum productivity. Preferably, at least in the collaborative zone 4 and possibly also in the rest of the plant 1, there is a path 10, such as that shown schematically in figure 1, defined by a succession of identification elements of the path 11, 12.

The illustrated plant 1 includes a closed-loop path 10 which passes through the zone subject to restrictions 3 and the collaborative zone 4.

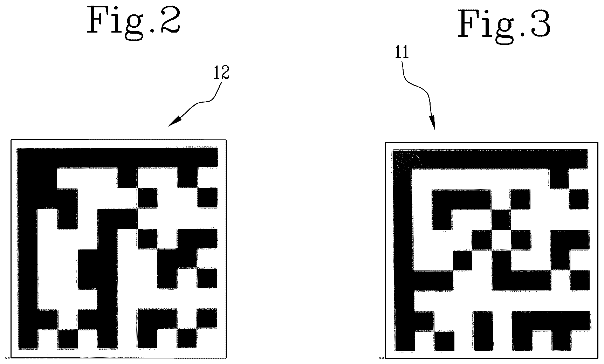

The route identification elements may be located at the flooring and include visible signs, such as graphical representations, for example two-dimensional matrix bar codes 11, 12 or "data matrix", such as those shown in figures 2 and 3. The identification elements of the path 11, 12 may code or in any case include information on the zone of the plant 1, in particular identifying the collaborative zone 4 and the zone subject to restrictions 3 and also a progressive number or other index which allows the relative position of the robot 2 on the path 10 to be established. In the example shown in the drawings, the identification elements of the restricted zone 3 are denoted by reference numeral '11' while those of the collaborative zone are denoted by reference numeral '12'.

For detecting the identification elements 10 of the path, the robots 2 may be equipped with an optical acquisition device such as, for example, a camera, which may be located on the bottom of the robot 2 and facing towards the floor.

A description is given below of the invention in terms of a method for managing one or more robots 2 and of a system for controlling robots 2 which can actuate the proposed method.

The method according to the invention allows a determination in a reliable manner of whether the robots 2 are in the zone subject to restrictions 3, so that it is possible to use the robots 2 in complete safety both in that zone and in the collaborative zone.

The method comprises providing a zone subject to restrictions 3 in a structure; providing one or more robots 2 in said zone subject to restrictions 3. Preferably, the set of robots 2 subject to the steps of the method are all those robots 2 which are in the zone subject to restrictions 3, during a given work session, but the possibility is not excluded that, on the other hand, the robots 2 mentioned below are part of a sub-set of those present in the zone 3.

A further step is that of applying a limit to or inhibiting at least one operating function of the robots 2. More specifically, an operating function which may be limited or prevented may be the movement of the robots 2, which has already been mentioned; another function may be the actuation of the above-mentioned conveyor 21 with which the robots 2 are equipped. Preferably, in a preliminary step, the robots 2 are in the zone subject to restrictions 3 with both functions limited or inhibited. Moreover, it is also possible that the device for detecting persons or obstacles is limited or inhibited.

Although "inhibiting" can be considered a particular case of "limiting", in this description, "limitation" will mean a reduced or restricted activity and "inhibition" will mean the absence of activity. For this reason, it is possible that some functions are only limited and others are inhibited or that they are all inhibited or that they are all limited, and it is possible that the functions are all enabled or that some are enabled and others are inhibited or that some are enabled and others are limited.

Initially, the robots 2 may be in the area subject to restrictions 3 mainly in two ways which are significant for the purposes of the invention.

In one case, during the regular operation of the plant, the robots enter the zone subject to restrictions 3 and in another case, they are already inside the zone 3 from a previous work session, where they had been deactivated, that is to say, they had been switched off and then activated to start the new work session. For example, the second case occurs when the plant was previously shut down and is now restarted. Subsequently, there are various steps of the method and features of the system applicable to both the above-mentioned methods, specifying which are preferably specific for one case and for the other.

For each of the robots 2, the presence of a predetermined number of first identification elements 11 of the restricted zone 3 is detected.

Preferably, it is sufficient for at least a first identification element 11 to be detected, which may be a particular path identification element which includes information identifying the restricted zone 3. For example, the first identification elements 11 may be data matrix codes applied to the floor in the restricted zone 3 (see figure 3). It is also possible that the first identification elements 11 are identification elements of another type, including non-visual, for example of the radio frequency type.

For the purposes of detection, the robots 2 are equipped with means for detecting identification elements, such as, for example, the above-mentioned optical sensor.

A further very important step includes, for each of said robots 2, detecting the presence of a predetermined number of second identification elements 13 of the zone subject to restrictions 3, which are of a different type from that of the first identification elements 11.

The second identification element 13, like the first identification element 11, is used to check that the robots 2 are actually in the zone subject to restrictions 3, so as to then allow them to operate in high productivity mode, without the necessary precautions in the collaborative zone 4.

In order for this check to be fully reliable, the second identification elements 13 are advantageously of a different type from that of the first identification elements 11. For example, if the first identification elements 11 are of the visual type then the second elements 13 may be of the radiofrequency type or vice versa. It should also be noted that these identification elements 11, 13 may also be of another type, for example of the optical type (such as infrared or laser) or, in the case of recognition with imaging and/or artificial intelligence techniques, they could be morphological characteristics of the zone subject to restrictions 3.

For this reason, the diversity between the first and the second identification elements 11, 13 is not a diversity in the mere sense that they are two physically separate elements. Preferably, the first and second identification elements 11, 13 differ in terms of the type of technology necessary for their detection.

In this way, the system according to the invention is advantageously able to check that the robots 2 are in the zone subject to restrictions 3 with a mode which may allow a degree of certainty to be reached which satisfies the class PLd according to the EN ISO 13849-1 standard.

It should be noted that in a different embodiment of the invention, the same technology can be used for detecting the first and second identification elements, through two distinct detection channels. In practice, the robots 2 can have two separate devices associated with respective separate software modules which use the same type of technology, for example visual or radiofrequency or other, for detecting two identification elements which in this case would be physically separate both physically and by encoding.

Preferably, the second identification elements 13 use Rfid technology and they may comprise a plurality of transponders (or "tags") distributed in the zone subject to restrictions 3, for example along the perimeter (as shown schematically in figure 1) and the above-mentioned means for detecting the robots 2 may comprise an Rfid reader.

In this case, too, it may be sufficient to detect the presence of at least a second identification element 13, or, for example, even a single transponder, for the purpose of checking the zone subject to restrictions 3. In an important step of the method, if, for each of the robots 2 for which the presence of said predetermined number of first identification elements 11 has been detected and for which the presence of said predetermined number of second identification elements (13) has been detected, the limit is disapplied, or one or more of said functions of the robot (2) is allowed. Further, when said limit has been disapplied for a predetermined number of robots 2 (preferably all) or one or more of said functions have been allowed, the robots are actuated in such a way that they perform operational tasks in the zone subject to restrictions (3).

In practice, for the functions according to the method, which may be some or even all those already mentioned and, possibly, others, if previously a function had been limited it can now perform freely, that is to say, without restrictions imposed by the system according to the invention, and if the function was inhibited it can be activated freely, that is to say, without restrictions imposed by the system. A variant is also possible in which one or more of the functions that were inhibited are activated with restrictions. In practice, once the presence of both the identification elements of the zone subject to restrictions 3 has occurred for these robots 2, then it is certain that they are in the zone 3 in which they can operate in a non-cooperative mode and it is therefore no longer necessary to comply with limits and inhibitions of speed of translation, activation of the conveyor 21 and devices for detecting the presence of persons.

A further step of the method is that of allowing a movement of the robots 2, preferably of all the robots 2, in the zone subject to restrictions 3 with a speed of less than or equal to a predetermined maximum threshold.

As will be explained in more detail below, if the robots enter the zone subject to restrictions 3, the predetermined maximum threshold is preferably equal to the above-mentioned first safety threshold, while if they are already present therein at the time of their activation, the predetermined maximum threshold is equal to a second safety threshold. In this second case, in more general terms, a number of the robots 2 (for example, all) is firstly deactivated and is activated, that is to say, started, therefore switched on, in the zone subject to restrictions 3.

The second safety threshold is preferably less than the above-mentioned first safety threshold and even more preferably is equal to or less than a threshold determined by a law or by a standard or a regulation (or other rules) which makes it possible to move this type of robot 2 even in the potential presence of human personnel, regardless of the use of anti-collision safety systems. In practice, the robots 2 are moved, moreover for a period which may also be limited, with a reduced speed such that any eventual accident would not have fatal consequences. For example, the second safety threshold might be equal to 0.3 m/s or around this value. The reason why, before deactivating the speed limitations and allowing the robots 2 to move with a speed greater than the first safety threshold applied to the collaborative zone 4, they are operated with a speed of lower than the second safety threshold and it seems unlikely that they could detect, when stationary, both the first and the second elements which identify the restricted zone 3.

It should also be noted that the steps may have a different sequence to the one displayed in the above description, which in itself constitutes a specific embodiment. For example, the initial translation at the speed of lower than or equal to the second safety threshold may also occur before detecting the first identification element 11, if it has not already been detected. Moreover, the step of the method relating to the initial movement step at a speed of lower than or equal to the second safety threshold is a given possibility for the robots 2 if, as mentioned appears the most probable, that they do not detect from stationary both the first and the second elements. However, the method can also comprise the step wherein the above-mentioned movement of the robots 2, in the zone subject to restrictions 3, with a speed of lower than or equal to a predetermined maximum threshold, is actuated for the robots 2 relative to which the presence of the predetermined number of first identification elements 11 and the predetermined number of second identification elements 13 has not been verified. Conversely, the particular embodiment is also possible wherein the movement step, in the zone subject to restrictions 3, with a speed of lower than or equal to a predetermined maximum threshold, is implemented in advance for all the robots 2, before or after measuring the identification elements 11, 13.

More generally, the method may comprise that, before the removal of the limit on the movement, the robots 2 are allowed to move in the zone subject to restrictions 3 with a speed of lower than or equal to the above-mentioned maximum threshold, if as a limit case there is the particular condition in which the robots are stationary.

It should be noted that, in this description, the speed thresholds mentioned above have a value greater than zero.

Further, as mentioned, the invention also applies to the case in which the robots 2 enter the zone subject to restrictions 3. In this case, there is preferably a preliminary step wherein the robots 2 move in the zone 3 with a speed equal to or lower than the above-mentioned first safety threshold, that is to say, in particular it is possible to move in that zone 3 at the speeds with which they move in the collaborative zone 4. Preferably, the function for detecting persons or obstacles of the robots 2 is inhibited or limited in the zone subject to restrictions 3, once, for the robots 2 for which the presence of the predetermined number of first identification elements 11 has been detected, the presence of the predetermined number of second identification elements 13 is detected. Further details are provided below.

Before describing further structural and functional features of the system described, a brief description is given of its possible operations, according to a preferred embodiment, both in the case in which the robots enter the zone subject to restrictions 3 and in the case in which they are already present in the zone.

The robots 2 move in the plant 1 along the path 10 defined by the data matrix codes 11, 12, which vary depending on the zone in which they are located, in particular on the basis of whether they are in the collaborative zone 4 or in the zone subject to restrictions 3.

When the robots 2 are in the collaborative zone 4, the robots 2 move at a speed limited to the first safety threshold, the conveyor 21 thereof is inhibited and the laser scanner is activated.

When the robots 2 enter the zone subject to restrictions 3, the robots 2 can, for example, pass through an entrance portion, such as an initial corridor or the like. Entry to the zone may also be recognised by means for acquiring located at an access portal, which can comprise a photoelectric barrier or the like. After entering the restricted zone 3, initially, the robots 2 have the same arrangement as for the collaborative zone 4: the laser scanner 22 (or similar device) is activated, the conveyor 21 is inhibited and the traction apparatus 20 thereof is driven in such a way that they move with a speed equal to or less than the first safety threshold.

After entering, the robots 2 detect the code 11 positioned below them along the path 11 which passes through the zone subject to restrictions 3. At this point, the robots 2 continue to move at the speed limited by the first safety threshold until they have also detected the presence of at least one RFID transponder 13, and the limitation in speed is removed (movement function), the conveyor 21 is reactivated (transport function) and the laser scanner 22 is inhibited (function for detecting persons or obstacles). It should be noted that in the zone subject to restrictions 3 there is a plurality of transponders (or in any case second identification elements 13) which are preferably positioned in such a way that they can be detected at the passage of the robots 2 along the path 10 defined by the data matrix codes 11 (or in any case by the first distinctive elements).

If the robots 2 are already in the zone subject to restrictions 3, they are firstly deactivated, that is to say, switched off.

In this case, the method comprises a first activation step, in which the robots start up. As a precautionary measure, the conveyor 21 is inhibited and the laser scanner 22 can be activated. The robots 2 measure the data matrix code 11 and, after having obtained the first information that they are in the zone subject to restrictions, they can move forward with a speed equal to or less than the above-mentioned second safety threshold. More specifically, the robots 2 are initially stationary until a predetermined number of first identification elements 11 is detected, for each of them, after which the robots 2 are allowed to move with a speed less than or equal to the second safety threshold until the presence of at least one Rfid transponder 13 (or other second identification element) is detected for each of the robots 2, when the limit constituted by the second safety threshold is disapplied.

While they are in the zone subject to restrictions 3, the robots 2 can perform the sorting with the maximum productivity, since they are certainly not in the collaborative zone 4. From this zone, the robots 2 can exit and head towards the collaborative zone 4 where the limitation of translation speed will be set, the conveyor 21 will be inhibited whilst the laser scanner will be reactivated.

The system according to the invention also comprises processing means 6, which are described below.

Generally speaking, it should be noted that, in the present description, the processing means 6 are presented as being subdivided into separate functional modules solely for the purpose of describing the functions clearly and completely.

In practice, the processing means 6 may consist of a single electronic device, suitably programmed to perform the functions described and the various modules can correspond to hardware units and/or software routines forming part of the programmed device.

The functions can alternatively be performed by a plurality of electronic devices on which the above-mentioned functional modules can be distributed.

Generally speaking, the processing means 6 may have one or more microprocessors or microcontrollers for execution of the instructions contained in the memory modules and the above-mentioned functional modules may also be distributed on a plurality of local or remote calculators on the basis of the architecture of the network in which they reside.

Preferably, the processing means 6 comprise a local processing unit contained in each robot 2 and a central processing unit connected to each local unit by means of usual transceiver systems. Still more preferably, the local processing unit includes an electronic control device, which may be, for example, a PC or in any case may include a microprocessor and an electronic security device, which, for example, may be or may include a PLC, that is, a programmable logic controller. On these issues, we will come back in more detail later.

The processing means 6 include at least one consent module 61, 68 configured to inhibit or allow the above-mentioned functions of the robots 2 or apply or disapply a limitation to these functions.

There is also at least a first check module 62 configured to determine whether the above-mentioned detection means have detected the presence of a predetermined number of first identification elements 11 and there is also at least a second check module 63 configured to determine whether the detection means have detected the presence of a predetermined number of second identification elements 13 which are of a different type to that of the first identification elements 11. Further, the processing means 6 include at least one advancement module 65 configured for moving the robots 2.

According to an important aspect of the invention, the processing means 6 are configured for performing the following activities, not necessarily in the sequence in which they are presented (which constitutes a specific embodiment):
- applying a limit to or inhibiting at least one operating function of said robots 2;
- for each of said robots 2, detecting the presence of a predetermined number of first identification elements 11;
- for each of said robots 2, detecting the presence of a predetermined number of second identification elements 13;
- for each of said robots (2) for which the presence of the predetermined number of first identification elements 11 has been detected and for which the presence of said predetermined number of second identification elements 13 is detected, disapplying said limit or allowing one or more of the functions of the robot;
- when said limit has been disapplied for a predetermined number of robots 2 (preferably all) or one or more of said functions have been allowed, the robots are actuated in such a way that they perform operational tasks in the zone subject to restrictions 3.

For the activities listed above the same measures and variants already illustrated for the corresponding steps of the method according to the invention apply once more.

In practice, based on the measurements performed by the first and second check modules 62, 63, the consent module 61, 68 controls the modules designed to execute the operating functions.

In detail, each robot 2 includes a traction apparatus 20 which includes the above-mentioned traction motor subject to the processing means 6 and in particular to the advancement module 65.

There may also be a module of the conveyor 66, subject to the consent module 61, 68 configured for actuating the motor-driven belt (or similar device) of the conveyor 21. Moreover, there can be a scanning module 67 configured for controlling the laser scanner 22 or other device for detecting persons or obstacles.

Before illustrating a possible operation of interaction between the team of robots and the central processing unit, some important properties of the processing means 6 are described in general terms.

It should be noted that if the processing means include the above-mentioned central unit, then this may be configured to establish how the robots 2 move, that is to say, how and when the local unit must drive the conveyor 21 and the traction apparatus 20 in order to perform the works assigned. In practice, the central unit produces the working missions of the robots 2, which define times and methods of movement of the traction apparatus 20 and of the conveyor 21 and can also collect information on the status of the robots 2 for statistical or diagnostic purposes.

The local unit may be configured both to manage the operating activities of the respective robot and therefore directly activate the conveyor 21 and the traction apparatus 20, as well as the optical sensor of the above-mentioned camera (or like devices) and to manage the safety activities of the relative robot 2 and therefore activate the laser scanner 22, the RFID reader, and apply emergency protocols, such as emergency braking, obviously actuated using the traction apparatus 20.

Still more in detail, if present, the above-mentioned control device may be configured to manage the operating activities whilst the safety device may be configured to manage the safety activities.

Preferably, the above-mentioned modules of the conveyor 66, the advancement module 65 and first check module 62 are included in the local control device while the scanning module 67 and the second check module 63 are included in the local safety device.

Preferably, the processing means comprise a first consent form 61 configured to inhibit or limit the device for detecting persons or obstacles 22 of a robot when the presence of said predetermined number of first identification elements 11 and the presence of said predetermined number of second identification elements 13 has been detected. The first consent form 61 can be included in the local unit of the robots 2, for example in the safety device.

Also, and preferably, the processing means include a second consent module 68, configured to inhibit or limit the conveyor 21 and/or the traction apparatus 20 (or equivalent devices) and also configured to disinhibit by raising a limit set the conveyor 21 and/or the traction apparatus 20 of the robot 2, if the presence of said predetermined number of first identification elements 11 and the presence of said predetermined number of second identification elements 13 have been detected. The second consent module 68 may be included in the local unit of the robots 2, for example in the safety device.

The second consent module 68 can be configured to allow the robots 2 to move in the restricted zone 3 with a speed of lower than or equal to a predetermined maximum threshold, which, as mentioned, can be equal to the first safety threshold if the robots 2 enter the zone 3 or the second safety threshold if they were already in the restricted zone 3.

In other words, the second consent module 68 is configured to allow the robots 2 to move in the zone subject to restrictions 3 with a speed which is not the operating speed, in a preliminary step wherein not both the identification elements 11, 13 have been detected according to the modes of the method according to the invention, which are described in the foregoing.

The second consent module 68 is preferably configured to disapply said predetermined maximum threshold when, for the robot 2 for which the presence of said predetermined number of first identification elements 11 is detected, the presence of said predetermined number of second identification elements 13 is detected. In a version of the invention, in the central processing unit, which may form part of the plant 1 or be located elsewhere, there is a mission module 64 configured for generating mission signals designed to determine movements of the robots 2, on actuation of the respective local units, as a function of a safety status of the robots 2.

In detail, the local unit and, more specifically, the safety device, if present, is configured to determine a safety status of the respective robot 2 on the basis of what is determined by said checking modules 62, 63.

The safety device, or in any case the local unit of the robot 2, also includes a safety module 69 configured for generating a safety signal as a function of said predetermined safety status, designed to be received by the central unit. More specifically, preferably, the central unit exchanges signals with the control device of the local unit, which communicates with the safety device. Therefore, in this version of the invention, the control device acts as an intermediary between the central unit and the safety device.

The safety status refers to the condition of safety of the relative robot, that is to say, for example: presence in the collaborative zone or presence in the zone subject to restrictions. Other types of safety status are also possible.

For example, other safety statuses may be: presence in the zone subject to restrictions associated with detecting only the first identification element 11; presence in the zone subject to restrictions associated with detecting only the second identification element 13; presence in the zone subject to restrictions associated with the detection of the first and second identification elements 11, 13.

A possible operation of the system, if the robots 2 start in the restricted zone, is as follows.

The robots 2 are initially switched off and therefore, when they are started, they are stationary. For this reason, the control unit of each robot 2 is programmed to perform the restarting procedure described below.

The local units of the robots 2 verify the presence of the first identification element 11, for example one of the specific data matrix codes for the zone subject to restrictions 3, and send a first presence signal to the central processing unit.

At this point, the local unit of the robot 2 can disinhibit the traction apparatus 20 but activate it with the limitation of speed to the second safety threshold. As already mentioned in the description of the proposed method, there are also possible embodiments of the invention wherein this step is performed according to another sequence, or it is not necessary. Once the presence of the second identification element 13 has been detected, the local units disinhibit or apply limits to the above-mentioned operating functions of the respective robot 2 that is, in particular, the movement and the actuation of the conveyor 21. Conversely, the laser scanner 22 (or other detection device) can be inhibited.

In practice, the safety devices inform the central unit of their safety status, by means of the control devices of the respective robot 2 and disapply the limits or disinhibit the operating functions in the suitable manner. When all the robots 2 have communicated a safety status which corresponds to the presence in the zone subject to restrictions 3, the central unit sends mission signals corresponding to the safety status so that the robots 2 can perform the planned tasks.

The safety devices are also designed to activate emergency protocols if the central unit sends missions of movements which are not consistent with the safety status, for example if it orders the robots 2 to move with a speed greater than the above-mentioned maximum threshold without it being verified that the robots 2 are actually in the zone subject to restrictions 3.

If the robots 2 enter the area subject to restrictions 3, relative to the operation described above, there exists a variant that the local unit of each robot 2 can control the relative traction apparatus 20 so that it maintains the speed used in the collaborative zone 4 and in any case moves the robot 2 with a speed of lower than the first safety threshold. In this case, too, it is the central unit which instructs the movements of the robots 2, that is, establishes the missions, i.e., the tasks to be performed; and it is the local unit which implements these instructions. In detail, it is preferably the control device which directly activates the traction apparatus 20 in accordance with the work missions set by the central unit, after the safety device has disinhibited the apparatus 20.

Preferably, the processing means 6 are not only designed for switching the robots 2 from the collaborative mode to the non-collaborative mode, following the double checking of the identification details described above, but they are also designed for implementing a reverse switching, to be actuated when the robots 2 pass from the zone subject to restrictions 3 to the collaborative mode.

The processing means 6 are configured:
- for each of said robots 2, to detect the presence of a predetermined number of identification elements 12 of a collaborative zone 4; preferably, the detection of an identification element, such as, for example, a data matrix code 12 is sufficient; and
- for the robots 2 for which the presence of said predetermined number of identification elements 12 of the collaborative zone 4 has been detected, to apply a limit to or to inhibit at least one operating function of the robots 2.

Preferably, as already explained, the limited or inhibited limited functions are one or more from between: movement of the robots 2 and operation of the conveyor 21. The function of detecting persons or obstacles is disinhibited when the collaborative zone is recognised.

Lastly, the invention is also configured as a computer program which, running on processing means 6, is designed to actuate the steps of the method described.

## Claims

1. A method for the management of one or more robots (2), comprising the following steps:
providing a zone subject to restrictions (3) in a facility; providing one or more robots (2) in said zone subject to restrictions (3);
applying a limit to or inhibiting one or more operating functions of said robots (2);
for each of said robots (2), detecting the presence of a predetermined number of first identification elements (11) of said zone subject to restrictions (3);
for each of said robots (2), detecting the presence of a predetermined number of second identification elements (13) of the zone subject to restrictions (3), which are of a different type from that of the first identification elements (11);
for each of said robots (2) for which the presence of the predetermined number of first identification elements (11) has been detected and for which the presence of said predetermined number of second identification elements (13) is detected, disapplying said limit or allowing one or more of said functions;
when said limit has been disapplied for a predetermined number of robots (2) or one or more of said functions have been allowed, actuating the robots (2) in such a way that they perform operational tasks in the zone subject to restrictions (3).

2. The method according to the preceding claim, wherein a function for detecting persons or obstacles is provided in said robots and that said function is inhibited or limited when for said number of robots (2) for which the presence of said predetermined number of first identification elements (11) is detected the presence of said predetermined number of second identification elements (13) is detected.

3. The method according to the preceding claim, wherein one of said functions of the robot (2) is its movement in said zone (3).

4. The method according to the preceding claim, wherein a movement of said robots (2) in the zone subject to restrictions (3) is allowed with a speed less than or equal to a predetermined maximum threshold.

5. The method according to the preceding claim, wherein said predetermined maximum threshold is disapplied for each of the robots (2) for which the presence of said predetermined number of first identification elements (11) is detected and the presence of said predetermined number of second identification elements (13) is detected.

6. The method according to the preceding claim, wherein said maximum threshold corresponds to a second safety threshold less than a first safety threshold of the speed of the robots (2) associated with a zone different from said zone subject to restrictions (3).

7. The method according to at least one of the preceding claims, wherein a number of said robots (2) is preliminarily deactivated and is activated in the zone subject to restrictions.

8. The method according to the preceding claim, wherein one between the first and the second identification elements (11, 13) is of the visual type and the other is of the radiofrequency type.

9. The method according to at least one of the preceding claims, wherein in said zone subject to restrictions (3), a plurality of said first identification elements (11) is provided to define a path (10) for the robots (2).

10. The method according to the preceding claim, wherein in said zone a plurality of second identification elements (13) is provided which are positioned in such a way that they can be detected when the robots (2) pass along said path (10).

11. The method according to the preceding claim and claim 5 or 6, wherein said robots (2) are initially stationary until, for each of them, a predetermined number of first identification elements (11) is detected, after which these robots (2) are allowed to move with a speed less than or equal to said predetermined maximum threshold until the presence of said predetermined number of second identification elements (13) is detected for each of the robots (2), when the limit constituted by the maximum speed threshold is disapplied.

12. The method according to at least one of the preceding claims, wherein one of said functions of the robot (2) is the actuation of a relative conveyor (21) designed to move an article.

13. The method according to the preceding claim, wherein said actuation is preliminarily inhibited and is then allowed following the detection of the presence of the above-mentioned predetermined numbers of the first and second identification elements (11, 13).

14. A system for managing one or more robots (2), comprising:
one or more robots (2) provided with means for detecting identification elements (11) of a zone subject to restrictions (3) and
one or more devices designed to perform operational functions; and
processing means (6) which include:
at least one consent module (61, 68) configured to inhibit or allow said functions or apply or disapply a limitation to said functions;
at least a first check module (62) configured to determine whether said detection means have detected the presence of a predetermined number of first identification elements (11);
at least a second check module (63) configured to determine whether said detection means have detected the presence of a predetermined number of second identification elements (13) which are of a different type to that of the first identification elements (11);
and
at least one advancement module configured for moving the robots (2);
said processing means (6) also being configured to perform the following activities:
applying a limit to or inhibiting one or more operating functions of said robots (2);
for each of said robots (2), detecting the presence of a predetermined number of first identification elements (11);
for each of said robots (2), detecting the presence of a predetermined number of second identification elements (13); and
for each of the robots (2) for which the presence of said predetermined number of first identification elements (11) has been detected and for which the presence of said predetermined number of second identification elements (13) has been detected,
disapplying said limit or allowing one or more of said functions of the robot (2);
when said limit has been disapplied for a predetermined number of robots (2) or one or more of said functions have been allowed,
actuating the robots (2) in such a way that they perform operational tasks in the zone subject to restrictions (3).

15. The system according to the preceding claim, wherein said robots (2) comprise a device (22) for detecting the presence of an obstacle or a person and wherein said processing means (6) include a scanning module (67) configured for controlling said device for detecting persons or obstacles (22), said processing means (6) being configured for inhibiting or limiting the device (22) for each of those robots (2) for which the presence of the predetermined number of first identification elements (11) and the presence of the predetermined number of second identification elements (13) has been detected.

16. The system according to claim 14 or 15, wherein the detection means include a consent module (61, 68) configured to allow said robots (2) to move in the zone subject to restrictions (3) with a speed less than or equal to a predetermined maximum threshold.

17. The system according to the preceding claim, wherein said consent module (61, 68) is configured for disapplying said predetermined maximum threshold in the robots (2) for which the presence of said predetermined number of first identification elements (11) and the presence of said predetermined number of second identification elements (13) has been detected.

18. The system according to the preceding claim, wherein said maximum threshold corresponds to a second safety threshold lower than a first safety threshold of the speed of the robots (2) associated with a zone different from said zone subject to restrictions (3).

19. The system according to at least one of claims 14 to 18, wherein the processing means (6) are configured for detecting, following the activation of each of a number of robots in the zone subject to restrictions (3), the presence of a predetermined number of first identification elements (11) and, after that, for moving the robots (2) with a speed less than or equal to a predetermined maximum threshold until the presence of said predetermined number of second identification elements (13) is detected for each of the robots (2) and, after that, for disapplying the limit constituted by the maximum speed threshold.

20. The system according to at least one of claims 14 to 19, wherein said detection means comprise a first detection device of the optical type and a second detection device of the radiofrequency type.

21. The system according to at least one of claims 14 to 20, wherein each of said robots (2) includes a traction apparatus (20) which includes a traction motor subject to said processing means (6), one of said operating functions of the robots (2) being their movement by means of said traction apparatus (20).

22. The system according to at least one of claims 14 to 21, wherein each of said robots (2) includes a motor-driven conveyor (21) designed to move an article and subject to said processing means (6), wherein one of said operating functions of the robot (2) is the actuation of said conveyor (21).

23. A plant comprising a system according to at least one of claims 14 to 22 and a zone subject to restrictions (3), inside the facility, designed to house the robots (2) of the system, said zone comprising a plurality of said first identification elements (11) to define a path (10) for the robots (2) and a plurality of second identification elements (13) positioned in such a way that they can be detected when the robots (2) pass along said path (10).

24. A computer program which, when running on processing means (6), is configured to implement the steps of the method according to any one of claims 1 to 13.
